# FASCICULE DE BREVET EUROPEEN

(11) **EP 2 581 310 B1**
(45) Date de publication et mention de la délivrance du brevet: **18.01.2017**
(21) Numéro de dépôt: 12005080.2
(22) Date de dépôt: 17.07.2012
(51) Int. Cl.: B64D 47/02

(54) **Giravion doté d'un équipement d'éclairage à plusieurs projecteurs exploités pour l'atterissage, le treuillage et la recherche**
Drehflügler, welcher mit einer Beleuchtungsvorrichtung mit mehreren Scheinwerfern für das Landen sowie für Such- und Bergungsaktionen mit einer Winde ausgestattet ist
Rotorcraft provided with a lighting apparatus with a plurality of projectors used for landing, hoisting and searching

(30) Priorité: 29.07.2011 FR 1102395
(43) Date de publication de la demande: 17.04.2013
(73) Titulaire: Airbus Helicopters, 13725 Marignane Cedex (FR)
(72) Inventeur: Fidanza, Raphaël, 13015 Marseille (FR)
(74) Mandataire: GPI & Associés

(56) Documents cités:
- EP-A2- 1 683 720
- WO-A2-00/49331
- US-A- 3 634 622
- US-A- 4 115 841
- US-A- 5 589 901

## Description

La présente invention est du domaine des giravions, et relève plus particulièrement des équipements embarqués à bord des giravions pour éclairer leur environnement extérieur.

La présente invention a pour objet un giravion selon la revendication 1, doté d'un tel équipement, comprenant plusieurs dispositifs d'éclairage de zones à illuminer respectives et distantes du giravion. La présente invention a aussi pour objet une méthode pour sa mise en oeuvre selon la revendication 15.

Les giravions sont équipés de divers dispositifs embarqués d'éclairage de leur environnement extérieur. Dans leur généralité, de tels dispositifs d'éclairage mettent en oeuvre un ou plusieurs projecteurs, et des moyens de commande de l'émission d'un faisceau lumineux par le projecteur. Les moyens de commande sont activables par un opérateur embarqué à bord du giravion, pilote ou assistant pilote notamment. L'activation des moyens de commande par l'opérateur est placée sous la dépendance d'un organe de commande entraîné par l'homme.

L'organisation et l'implantation des projecteurs sur le giravion varient selon des contraintes qui sont propres aux fonctionnalités spécifiques des dispositifs d'éclairage. Un compromis est à trouver entre l'optimisation de la fonctionnalité qui est dédiée à un dispositif d'éclairage, et les contraintes qui sont liées à l'organisation et à l'installation sur le giravion du ou des projecteurs qu'il met spécifiquement en oeuvre pour procurer cette fonctionnalité. A titre illustratif, il est fait référence à une typologie non limitative des dispositifs d'éclairage embarqués sur les giravions, permettant l'éclairage d'une zone à illuminer distante selon leur fonctionnalité spécifique :
*) Les dispositifs d'éclairage en atterrissage relève d'une fonctionnalité selon laquelle la zone à illuminer est une zone vers laquelle le giravion est prévu d'atterrir. Les dispositifs d'éclairage en atterrissage sont destinés à éclairer modérément une zone au sol prédéterminée en phase de vol d'approche du giravion.
*) Les dispositifs d'éclairage en recherche relèvent d'une intervention en observation de l'environnement extérieur du giravion par un opérateur embarqué. Les dispositifs d'éclairage en recherche sont destinés à éclairer avec une forte illumination des zones pouvant être relativement quelconques et éloignées du giravion.
*) Les dispositifs d'éclairage en treuillage sont destinés à éclairer modérément une zone à illuminer préalablement identifiée par le pilote au moyen du dispositif d'éclairage en recherche. La zone à illuminer est élargie au regard d'une zone à éclairer en atterrissage, pour permettre une intervention sur la zone identifiée.

Parmi les contraintes relatives à l'organisation des dispositifs d'éclairage, leurs coûts d'obtention sont recherchés les plus faibles possibles. Le poids global de l'ensemble des projecteurs équipant le giravion doit être réduit au mieux. Il est opportun de limiter le nombre de projecteurs équipant le giravion sans affecter les fonctionnalités d'éclairage souhaitées. Les équipements que comportent individuellement l'ensemble des projecteurs installés sur le giravion doivent être limités et de structure la plus simple possible, sans affecter l'obtention de la fonctionnalité des divers dispositifs d'éclairage auxquels ils sont respectivement dédiés.

L'agencement et l'implantation des projecteurs sur le giravion doivent être organisés pour éviter les trainées qu'ils peuvent induire au détriment de l'aérodynamisme du giravion. Ainsi, il est courant de monter un projecteur escamotable sur le giravion pour permettre son effacement lorsqu'il n'est pas utilisé, et/ou d'implanter un projecteur sur le giravion dans une zone limitant sa prise au vent.

Il est souhaitable d'optimiser l'espace disponible sur le giravion pour l'installation d'autres équipements que les dispositifs d'éclairage. La localisation sur le giravion et l'encombrement des projecteurs munis de leur équipement, doivent prendre en compte une optimisation de cet espace disponible. La localisation et les modalités d'implantation des projecteurs sur le giravion doivent encore éviter une interposition de masques, qui sont susceptibles de faire obstacle au passage du faisceau lumineux entre le projecteur et la zone distante à illuminer.

La paroi extérieure du giravion est formée d'une peau qui est réputée fragile et qu'il faut protéger. La puissance du projecteur est déterminante pour l'obtention d'une luminosité satisfaisante d'éclairage de la zone à illuminer, selon la fonctionnalité recherchée du dispositif d'éclairage. La puissance d'éclairage du projecteur induit son échauffement, et un compromis doit être trouvé entre la puissance du faisceau lumineux qu'il émet et les effets induits sur la peau par la chaleur dégagée. La puissance thermique du projecteur doit être la plus faible possible et la localisation et/ou les modalités d'implantation du projecteur doivent éviter d'induire un échauffement de la paroi extérieure du giravion.

Un montage en mobilité du projecteur sur le giravion procure l'avantage de permettre son escamotage, voire encore de l'orienter pour diriger le faisceau lumineux qu'il émet vers une relativement quelconque zone à illuminer distante. La mobilité du projecteur est avantageusement placée sous la dépendance des moyens de commande, pour permettre à l'opérateur de l'orienter selon ses besoins. L'organe de commande est associé aux moyens de commande formés d'au moins un calculateur de gestion du fonctionnement du projecteur, tant au regard de l'émission du faisceau lumineux qu'il émet que de la mobilité du projecteur.

Les dispositifs d'éclairage en atterrissage comprennent un ou plusieurs projecteurs qui sont traditionnellement d'une puissance modérée de l'ordre de 250 W. Un projecteur est monté fixe sur le giravion et est accessoirement complété par un autre projecteur monté mobile. Les dispositifs d'éclairage en treuillage comprennent plusieurs projecteurs indépendants, couramment au nombre de deux, qui sont traditionnellement chacun d'une puissance moyenne de l'ordre de 600 W. Les projecteurs des dispositifs d'éclairage en treuillage sont de préférence individuellement montés mobiles sur le giravion, pour permettre au pilote de diriger indépendamment chacun des faisceaux lumineux qu'ils émettent respectivement. Compte tenu de leur fonctionnalité, la liberté d'implantation sur le giravion des projecteurs que comprennent les dispositifs d'éclairage dédiés en atterrissage et en treuillage est restreinte. L'encombrement des projecteurs doit être au mieux limité pour faciliter leur implantation sur le giravion, en évitant les effets thermiques induits et une gêne pour l'installation d'autres équipements.

Les dispositifs d'éclairage en recherche sont plus complexes et encombrants que les dispositifs d'éclairage dédiés en atterrissage et en treuillage. Les dispositifs d'éclairage en recherche doivent procurer un éclairage de la zone à illuminer avec une forte intensité lumineuse, et mettent en oeuvre des projecteurs puissants qui induisent leur échauffement important. Les dispositifs d'éclairage en recherche comprennent un ou plusieurs projecteurs qui sont traditionnellement conjointement portés par un châssis. Les projecteurs sont individuellement montés sur le châssis par l'intermédiaire d'un support dont ils sont chacun équipés. Le châssis et/ou le support sont potentiellement étendus avec un encombrement conséquent, tel qu'agencé en mât ou analogue. Le châssis est couramment monté extractible sur le giravion, pour limiter les inconvénients liés à cet encombrement conséquent et pour éviter une prise au vent néfaste du projecteur lorsque le dispositif d'éclairage en recherche n'est pas utilisé. Compte tenu de la localisation des zones à illuminer qui sont potentiellement relativement quelconques, le projecteur peut être aisément et temporairement placé sur le giravion, en évitant d'éventuels masques susceptibles de faire obstacle au passage des faisceaux lumineux vers la zone à illuminer. Une extension du châssis et/ou du support procure l'avantage d'éloigner le ou les projecteurs de la paroi extérieure du giravion, pour éviter son échauffement en raison de la puissance importante de chacun des projecteurs, de l'ordre de 1600 W. Dans le cas où plusieurs projecteurs sont installés sur le support, ceux-ci sont montés conjointement mobiles pour permettre de les diriger ensemble vers la zone à illuminer, en restreignant leur puissance individuelle tout en procurant conjointement une illumination importante de la zone éloignée à éclairer.

Pour connaître un environnement technologique proche de la présente invention, on pourra par exemple se reporter aux documents WO0049331 (ALLIED SIGNAL INC) et WO03039957 (HONEYWELL INT INC), qui décrivent des projecteurs embarqués pour giravion dédiés à l'éclairage d'une zone à illuminer distante du giravion. La mise en oeuvre des projecteurs est placée sous la dépendance de moyens de commande, qui sont affectés à la gestion de leur fonctionnement.

On pourra par exemple encore se reporter au document EP1138593 (HELLA KG HUECK & CO), qui décrit un projecteur que comprend un dispositif d'éclairage en atterrissage. Le projecteur est monté fixe sur un aéronef et est équipé d'une lampe à décharge de gaz et de plusieurs systèmes optiques. Les systèmes optiques sont montés conjointement mobiles à l'intérieur du projecteur, en émettant des faisceaux lumineux respectifs qui permettent d'éclairer en chevauchement la zone à illuminer avec une intensité lumineuse suffisante, tout en limitant les effets thermiques produits par le projecteur.

On pourra aussi se reporter aux documents US 3 634 622 (WHEELER B.A.), WO 00/49331 (ALLIEDSIGNAL Inc.) et U,S 5 589 901 (MEANS K.P.) qui décrivent divers dispositifs d'éclairage en recherche comportant au moins un projecteur monté mobile sur un giravion.

Selon le document US 3 634 622 (WHEELER B.A.), un dispositif d'éclairage en recherche comporte deux projecteurs montés individuellement mobiles sur un giravion. Les projecteurs peuvent être orientés en convergence vers une zone à illuminer distante du giravion.

Selon le document WO 00/49331 (ALLIEDSIGNAL Inc.), un projecteur de recherche est monté en mobilité motorisée sur un giravion, suivant deux axes concourants respectivement en azimut et en site par rapport au giravion. Le projecteur est monté basculant entre une position d'escamotage à l'intérieur d'un logement ménagé dans la paroi du giravion, et une position déployée hors du logement. Le projecteur basculé en position déployée est aussi manoeuvrable en pivotement sur lui-même.

Selon le document US 5 589 901 (MEANS K.P.), un couple de projecteurs de recherche sont manoeuvrable en mobilité par l'intermédiaire de moyens motorisés dont la mise en oeuvre est placée sous la dépendance de moyens de commande activables par l'homme.

Les modalités d'organisation d'un équipement d'éclairage d'un giravion méritent d'être améliorées, au regard de diverses fonctions potentielles d'éclairage d'une zone distante du giravion à illuminer.

Selon une réalisation de la présente invention, un giravion est équipé de divers dispositifs d'éclairage qui procurent individuellement une fonctionnalité propre d'éclairage d'une zone à illuminer distante. Les diverses fonctionnalités d'éclairage sont notamment et à titre non limitatif, une fonctionnalité d'éclairage en atterrissage, une fonctionnalité d'éclairage en recherche et une fonctionnalité d'éclairage en treuillage. La présente invention a aussi pour objet un équipement d'éclairage organisé pour équiper un giravion, et une méthode de mise en oeuvre d'un tel équipement. Il est plus particulièrement recherché par la présente invention d'équiper un giravion d'une architecture d'éclairage de son environnement extérieur comprenant divers dispositifs d'éclairage procurant des fonctionnalités d'éclairage spécifiques, en prenant en compte les diverses contraintes qui ont été précédemment énoncées.

Le giravion est doté d'un équipement d'éclairage embarqué de son environnement extérieur. L'équipement d'éclairage comporte une pluralité de dispositifs d'éclairage de zones à illuminer spécifiques et distantes du giravion, qui sont individuellement mis en oeuvre par un pilote à partir de moyens de commande qui sont placés sous la dépendance d'au moins un organe de commande entraîné par l'homme. Les dispositifs d'éclairage dont est doté le giravion sur lequel ils sont embarqués, comprennent notamment au moins un dispositif d'éclairage en atterrissage, un dispositif d'éclairage en recherche et un dispositif d'éclairage en treuillage.

Chacun des dispositifs d'éclairage comprend au moins un projecteur, qui comporte un boîtier logeant un module d'éclairage comprenant un système optique et une source lumineuse. Chacun des dispositifs d'éclairage comprend aussi des moyens de commande de l'émission d'un faisceau lumineux par le projecteur.

Un projecteur pour giravion est un appareil d'éclairage comprenant un boîtier qui est fermé par une paroi transparente à travers laquelle émergent un ou plusieurs faisceaux lumineux. Ce boîtier loge au moins un module d'éclairage, comprenant principalement une source lumineuse et un système optique apte à modifier au moins un paramètre de la lumière générée par la source lumineuse pour l'émission du faisceau lumineux par le module d'éclairage.

La source lumineuse est par exemple formée d'une lampe à gaz, d'un jeu de diodes électroluminescentes (DEL) ou de tout autre organe apte à émettre de la lumière.

Le système optique comprend des composants optiques qui sont par exemple constitués d'un réflecteur, d'une lentille, d'un élément diffusant ou d'un collimateur, voire tout autre organe apte à modifier au moins l'un des paramètres de la lumière générée par la source lumineuse, tel que sa réflexion moyenne et/ou sa direction. Le système optique est encore susceptible de comprendre des moyens de réglage de la distance focale du projecteur, dont la mise en oeuvre est potentiellement activable par les moyens de commande.

Le projecteur est équipé de moyens d'alimentation en énergie électrique, à partir de son raccordement au réseau de bord du giravion notamment. L'émission par le projecteur d'un faisceau lumineux est placée sous la dépendance de moyens d'activation sélective de la source lumineuse qu'il comporte. La mise en oeuvre des moyens d'activation de la source lumineuse est placée sous la dépendance des moyens de commande, pour interrompre ou autoriser sélectivement l'alimentation en énergie de la source lumineuse à partir d'une commande qui est générée par un organe de commande entraîné par l'homme. La source lumineuse est notamment raccordée au réseau de bord du giravion pour son alimentation en énergie.

Le boîtier que comporte le projecteur est avantageusement exploité pour son implantation sur le giravion, telle que notamment par intégration du boîtier d'un projecteur à la paroi extérieure du giravion.

Les moyens de commande sont notamment des moyens de calcul associés à des moyens de mémoire qui sont intégrés dans au moins un calculateur. Les moyens de calcul génèrent des ordres de commande à partir d'au moins une commande d'éclairage émis par un organe de commande entraîné par l'homme. Les ordres de commande sont aptes à activer un actionneur affecté à la mobilité du boîtier que comporte le projecteur, et/ou à activer la source lumineuse que comporte le projecteur, et/ou encore accessoirement à intervenir sur le système optique que comporte le projecteur pour faire varier sa distance focale par exemple.

La présente invention porte essentiellement sur l'organisation du dispositif d'éclairage en recherche que comprend l'équipement d'éclairage dont le giravion est doté. Un tel dispositif d'éclairage en recherche comprend notamment au moins un projecteur de recherche, qui est monté mobile sur le giravion et qui est équipé de moyens de manoeuvre en azimut et en site par rapport au giravion. Les moyens de manoeuvre sont mis en oeuvre par des moyens de commande en recherche, à partir d'une commande d'éclairage en recherche d'une zone de recherche à illuminer. La commande d'éclairage en recherche est générée par au moins un organe de commande en recherche qui est entraîné par l'homme.

La démarche inventive de la présente invention est fondée sur une limitation du nombre des projecteurs montés sur le giravion pour procurer l'ensemble des fonctionnalités d'éclairage recherchées. Une telle limitation est choisie en exploitant pour la fonctionnalité d'éclairage en recherche les projecteurs qui sont exploités pour les autres fonctionnalités d'éclairage, éclairage en atterrissage et éclairage en treuillage notamment.

Plus particulièrement, les projecteurs de recherche sont composés d'au moins deux projecteurs de recherche, qui sont des projecteurs que comprend l'un quelconque au moins des autres dispositifs d'éclairage que comporte l'équipement d'éclairage embarqué sur le giravion. Les projecteurs de l'équipement d'éclairage sont répartis sur le giravion selon au moins deux fonctions d'éclairage qui sont spécifiques aux dits autres dispositifs d'éclairage, dispositif d'éclairage en atterrissage et dispositif d'éclairage en treuillage notamment. La fonction d'éclairage en recherche est procurée à partir d'une commande d'éclairage en recherche commune à l'ensemble des projecteurs de recherche, et à partir d'une activation sélective par les moyens de commande des projecteurs que comporte l'équipement d'éclairage.

Les projecteurs que comprend l'équipement d'éclairage sont affectés à plusieurs fonctionnalités d'éclairage, dont une fonctionnalité d'éclairage qui leur est spécifique et une fonctionnalité d'éclairage en recherche qui exploite les projecteurs mis en oeuvre par les fonctionnalités d'éclairage spécifiques. Les projecteurs que comprend l'équipement d'éclairage sont implantés sur le giravion et sont individuellement organisés, en puissance d'éclairage notamment, selon leur fonctionnalité d'éclairage spécifique, fonctionnalité d'éclairage en atterrissage et fonctionnalité d'éclairage en treuillage notamment. Les projecteurs que comprend l'équipement d'éclairage sont sélectivement exploités pour la fonctionnalité d'éclairage en recherche.

Les moyens de commande comprennent des moyens de fonctionnalité qui sont relatifs à la mise en oeuvre sélective des différents dispositifs d'éclairage que comporte l'équipement d'éclairage. Les moyens de fonctionnalité permettent à un opérateur de sélectionner une fonctionnalité d'éclairage à mettre en oeuvre parmi les diverses fonctionnalités d'éclairage que procure l'équipement d'éclairage du giravion. La mise en oeuvre des moyens de fonctionnalité est placée sous la dépendance d'une commande d'éclairage fonctionnel, qui est générée par un organe de commande d'éclairage fonctionnel entraîné par l'homme, tel qu'agencé en organe de commande à choix multiples ou analogue. A partir d'une commande d'éclairage fonctionnel correspondante, les moyens de fonctionnalité provoquent une mise en oeuvre des projecteurs que comporte l'équipement d'éclairage, soit selon une règle de fonctionnalité prédéterminée selon leur affectation à l'une ou l'autre des fonctionnalités d'éclairage spécifiques, soit selon une règle de fonctionnalité en recherche correspondante à la fonctionnalité d'éclairage en recherche. La règle d'éclairage en recherche est gérée par les moyens de commande selon la localisation d'implantation sur le giravion des projecteurs que comprend l'équipement d'éclairage, et plus particulièrement est gérée par des moyens de coordination de la mise en oeuvre des projecteurs de recherche que comprennent les moyens de commande.

La commande d'éclairage en recherche relève d'une localisation par un opérateur, pilote ou autre opérateur embarqué sur le giravion, de la zone de recherche à illuminer conjointement par les projecteurs de recherche. La commande d'éclairage en recherche est commune à l'ensemble des projecteurs de recherche, et correspond à des coordonnées cartésiennes de référence relatives à la localisation par l'opérateur de la zone à illuminer par rapport au giravion. De telles coordonnées cartésiennes de référence sont susceptibles d'être générées à partir de la manoeuvre d'un organe de commande agencé en manche ou analogue équipant le giravion, tel qu'une manette à mobilité multidirectionnelle avantageusement munie de moyens d'implantation dans l'accoudoir d'un siège. La manette est par exemple montée mobile suivant deux axes de basculement concourants, qui sont respectivement affectés à une requête par l'opérateur d'un entraînement des projecteurs de recherche en site et en azimut par rapport au giravion.

Les projecteurs de recherche étant en pluralité en étant distants les uns des autres, l'illumination de la zone de recherche par l'ensemble des projecteurs de recherche est soumise à une mise en convergence vers la zone de recherche des faisceaux lumineux que les projecteurs émettent respectivement. Une telle mise en convergence est procurée par des moyens de coordination de la mise en oeuvre individuelle des projecteurs de recherche, que comprennent les moyens de commande. Les moyens de coordination sont notamment des moyens de calcul pondérateurs des coordonnées cartésiennes de référence, en fonction de paramètres prédéfinis relatifs à la localisation individuelle des projecteurs de recherche sur le giravion. Les moyens de coordination corrigent pour chacun des projecteurs de recherche les coordonnées cartésiennes de référence, à partir des paramètres de pondération respectivement correspondants à la localisation sur le giravion de chacun des projecteurs de recherche. Les moyens de coordination génèrent des ordres d'entraînement individuel des projecteurs en mobilité sur le giravion, à partir d'une commande d'éclairage commune à l'ensemble des projecteurs de recherche. Pour une même zone de recherche à illuminer, les projecteurs de recherche sont conjointement entraînés par les moyens de coordination suivant des orientations individuelles d'illumination de la zone de recherche induisant une mise en convergence des faisceaux lumineux qu'ils émettent respectivement. Les projecteurs de recherche sont entraînés vers les orientations individuelles d'illumination qui leurs sont respectivement affectées, selon des ordres d'entraînement qui sont propres à chacun des projecteurs de recherche et qui sont générés par les moyens de coordination, après correction des coordonnées cartésiennes de référence.

Les projecteurs composant les projecteurs de recherche sont formés par des projecteurs exploités par le dispositif d'éclairage en atterrissage et/ou par le dispositif d'éclairage en treuillage, sans nécessiter l'exploitation d'un projecteur de recherche spécifiquement exploité et/ou réservé à la mise en oeuvre du dispositif d'éclairage en recherche. Les projecteurs composant les projecteurs de recherche sont susceptibles d'être composés d'au moins l'un des projecteurs de l'un et l'autre d'au moins deux dispositifs d'éclairage que comprend l'équipement d'éclairage qui sont utilisés conjointement, dispositif d'éclairage en atterrissage et dispositif d'éclairage en treuillage plus particulièrement. Les projecteurs composant les projecteurs de recherche sont encore susceptibles d'être composés de plusieurs projecteurs que comprend l'un quelconque au moins de chacun des dispositifs d'éclairage que comprend l'équipement d'éclairage. Idéalement et pour optimiser l'illumination et/ou l'étendue de la zone de recherche à éclairer, l'ensemble des projecteurs du dispositif d'éclairage en atterrissage et du dispositif d'éclairage en treuillage sont exploités pour former les projecteurs de recherche.

Les projecteurs que comprend l'équipement d'éclairage dont le giravion est doté, sont aptes à être relativement librement intégrés à la paroi extérieure du giravion en procurant sélectivement plusieurs fonctionnalités d'éclairage, notamment la fonctionnalité d'éclairage en atterrissage, la fonctionnalité d'éclairage en recherche et/ou la fonctionnalité d'éclairage en treuillage. Quelle que soit la fonctionnalité choisie par un opérateur embarqué, pilote ou assistant pilote notamment, les projecteurs montés individuellement sur le giravion en des emplacements choisis sur sa paroi extérieure sont susceptibles d'être de structures mécaniques analogues facilitant leur implantation et réduisant les coûts d'obtention de l'équipement d'éclairage. L'intégration et l'implantation des projecteurs à la paroi extérieure du giravion procurent une fonctionnalité d'éclairage en recherche qui est efficace, à partir de la seule exploitation des projecteurs des autres dispositifs d'éclairage que comprend l'équipement d'éclairage dont le giravion est doté. Le nombre de projecteurs de recherche potentiellement exploitables par un opérateur embarqué est optimisé, sans induire une redondance de projecteurs devant être implantés sur le giravion pour procurer l'ensemble des fonctionnalités d'éclairage qui sont à la disposition de l'opérateur.

Les effets de traînée susceptibles d'être induits par les projecteurs de recherche lorsqu'ils ne sont pas utilisés sont évités, sans avoir à intervenir sur leur installation à demeure sur le giravion. Les conséquences induites par d'éventuels masques faisant obstacle au passage des faisceaux lumineux émis par les projecteurs de recherche vers la zone de recherche à illuminer sont limitées. La faculté offerte d'une implantation distante sur le giravion d'une pluralité de projecteurs de recherche de puissance individuelle modérée, ne porte pas atteinte à la mise en convergence des faisceaux lumineux que les projecteurs de recherche émettent respectivement.

La puissance thermique générée par chacun des projecteurs peut être réduite, en obtenant néanmoins un éclairage optimisé de la zone de recherche à illuminer, sélectivement tant en luminosité qu'en surface couverte de la zone de recherche illuminée. La puissance thermique individuelle des projecteurs relève notamment des puissances thermiques courantes exploitées pour les dispositifs d'éclairage en atterrissage ou les dispositifs d'éclairage en treuillage, si besoin légèrement majorée selon l'architecture spécifique du giravion et/ou de la localisation individuelle et distante des projecteurs à sa paroi extérieure.

Les moyens de commande de recherche comprennent plus particulièrement des moyens d'identification d'une zone de recherche à illuminer, à partir d'une commande d'éclairage en recherche qui est commune à l'ensemble des projecteurs. La zone de recherche est identifiée par rapport à un référentiel déterminé au regard d'un point d'origine localisé sur le giravion, et par rapport aux positions respectives sur le giravion des projecteurs de recherche au regard du référentiel. Les moyens de commande de recherche comprennent plus particulièrement encore des moyens de coordination de la mise en oeuvre individuelle des projecteurs de recherche. Les moyens de coordination provoquent une mise en convergence vers la zone de recherche des faisceaux lumineux qui sont respectivement émis par les projecteurs de recherche dont la source lumineuse est sélectivement activée.

Les moyens de coordinations sont notamment générateurs d'ordres d'activation sélective des sources lumineuses des projecteurs de recherche, et d'ordres d'entraînement individuel des projecteurs de recherche vers la zone de recherche. Les ordres d'entraînement individuel provoquent l'activation individuelle des moyens de manoeuvre équipant respectivement les projecteurs de recherche, en induisant la convergence vers la zone de recherche des faisceaux lumineux respectivement émis par les projecteurs de recherche dont la source lumineuse est sélectivement activée.

Selon une forme avantageuse de réalisation, les moyens de coordination sont générateurs d'ordres d'éclairage complémentaires pour parfaire l'illumination de la zone de recherche. De tels ordres d'éclairage complémentaires sont susceptibles d'être exploités sans induire une complexification structurelle des modalités d'implantation sur le giravion des projecteurs de recherche. Par exemple, les ordres d'éclairage complémentaires comprennent, isolément ou en combinaison :
*) Des ordres de focalisation individuelle des projecteurs de recherche, qui sont issus d'une commande d'éclairage de focalisation générée indifféremment par un organe de commande de focalisation entraîné par l'homme ou par des moyens de mesure de la distance de séparation entre le giravion et la zone de recherche. Les moyens de mesure sont des moyens appropriés embarqués sur le giravion, tels qu'une radio sonde ou moyens de mesure analogues d'une distance de séparation entre le giravion et le sol. Les moyens de mesure sont susceptibles d'être substitutifs ou complémentaires à autorité réduite de l'organe de commande de focalisation. Les ordres de focalisation sont notamment relatifs à une distance de séparation individuelle entre les projecteurs de recherche et la zone de recherche, et provoquent l'activation d'un actionneur du système optique des projecteurs de recherche modifiant leur distance focale. Les ordres de focalisation provoquent notamment la mise en oeuvre d'actionneurs d'ajustement d'au moins un système optique que comprennent respectivement les projecteurs et qui induisent une modification de leur distance focale.

Selon une forme perfectionnée de réalisation, les projecteurs sont susceptibles de comporter chacun une pluralité de modules d'éclairage. Les activations individuelles des sources lumineuses que comprennent les différents modules d'éclairage équipant un même projecteur, sont susceptibles d'être placées sous la dépendance des moyens de coordination. Chacun des projecteurs est apte à émettre un faisceau lumineux d'intensité lumineuse variable selon le nombre de sources lumineuses qu'il comporte et qui sont sélectivement activées par les moyens de coordination générateurs d'ordres d'activation individuelle des sources lumineuses que comprend un même projecteur. Les moyens de coordination sont aussi susceptibles d'être générateurs, à partir d'un même ordre de commande d'éclairage, d'ordres d'activation individuelle des actionneurs ajustant le système optique des divers modules d'éclairage que comporte un même projecteur.
*) Des ordres de dynamique d'éclairage qui sont relatifs à un entraînement individuel des projecteurs de recherche en convergence vers la zone de recherche, sélectivement soit en une position fixe soit selon un entraînement continu d'éclairage d'une zone de recherche mouvante définie par rapport au référentiel. Le caractère mouvant de la zone de recherche induit une mise en mobilité continue des projecteurs de recherche entre deux positions limites, la zone de recherche étant identifiée entre au moins deux zones de recherche limites qui sont définies par rapport au référentiel par les moyens d'identification. Les ordres de dynamique d'éclairage sont notamment issus d'une commande d'éclairage de dynamique qui est générée par un organe de commande de dynamique d'éclairage entraîné par l'homme. Les ordres de dynamique d'éclairage sont susceptibles d'intégrer des ordres de vitesse de balayage de la zone de recherche mouvante qui sont générés par les moyens de coordination.

Les ordres de vitesse de balayage sont notamment issus d'une commande d'éclairage de vitesse de balayage qui est générée par un organe de commande de vitesse de balayage entraîné par l'homme, équipant l'organe de commande de dynamique d'éclairage. L'organe de commande de dynamique d'éclairage intègre de préférence des moyens de réglage qui sont entraînés par l'homme et qui permettent à l'opérateur un réglage de paramètres relatifs à l'entraînement continu des projecteurs, vitesse de balayage notamment.
*) Des ordres en convergence qui sont relatifs à un entraînement des projecteurs sélectivement soit en chevauchement total soit en chevauchement partiel des projections sur la zone de recherche des faisceaux lumineux respectivement émis par les projecteurs. Les ordres en convergence sont notamment issus d'une commande d'éclairage en convergence qui est générée par un organe de commande en convergence entraîné par l'homme. La mise en convergence des faisceaux lumineux individuellement émis par les projecteurs correspond notamment à une mise en chevauchement des projections respectives de ces faisceaux lumineux sur la zone de recherche. La mise en chevauchement des projections est notamment induite par les moyens de coordination selon des critères sélectifs relatifs à une combinaison souhaitée par l'opérateur entre l'intensité d'illumination et la surface d'illumination de la zone de recherche.

Plus particulièrement à partir d'une mise en chevauchement sélectivement total ou partiel des projections des faisceaux lumineux sur la zone de recherche, la surface d'illumination de la zone de recherche est susceptible d'être plus ou moins restreinte pour une intensité d'illumination correspondante plus ou moins importante.

L'organe de commande en convergence est susceptible d'être équipé d'un organe de commande en chevauchement entraîné par l'homme, qui est générateur de commandes en chevauchement relatives au nombre et à l'étendue des zones de chevauchement pour une zone de recherche donnée. A partir d'une commande en chevauchement émise, les moyens de commande déterminent le ou les groupes de projecteurs à mettre en oeuvre pour induire, à partir d'un ordre en convergence, les géométries des zones de chevauchement à procurer.
*) Des ordres de zones qui sont relatifs à un entraînement des projecteurs sélectivement vers une ou plusieurs zones de recherche qui leur sont respectivement affectées. Les ordres de zone sont issus d'une commande d'éclairage de zones, qui est générée par un organe de commande de zone entraîné par l'homme.

La présente invention a aussi pour objet un équipement d'éclairage embarqué pour giravion, qui procure l'éclairage d'une zone à illuminer distante de l'équipement. L'organisation de l'équipement d'éclairage est adaptée à son implantation sur un giravion tel que précédemment décrit.

Un équipement d'éclairage embarqué pour giravion, comprend une pluralité de projecteurs qui comportent chacun un boîtier logeant une source lumineuse et un système optique.

Dans le cas notamment d'un projecteur de recherche, le boîtier est équipé de moyens de montage en mobilité sur un châssis et de moyens de manoeuvre suivant au moins deux axes de mobilité concourants. L'équipement d'éclairage comprend des moyens de commande de l'émission d'un faisceau lumineux par les projecteurs, et au moins un organe de commande entraîné par l'homme qui est générateur d'une commande d'éclairage à partir de laquelle les moyens de commande sont mis en oeuvre.

Les moyens de commande que comprend l'équipement d'éclairage intègrent des moyens d'identification d'une zone à illuminer, à partir d'une commande d'éclairage commune à l'ensemble des projecteurs qui est générée par un organe de commande entraîné par l'homme correspondant. La zone à illuminer correspond à une zone de recherche qui est distante de l'équipement par rapport à un référentiel préalablement établi au regard d'un point d'origine considéré.

Les moyens de commande comprennent aussi des moyens de coordination de la mise en oeuvre individuelle des projecteurs de recherche, qui provoquent une mise en convergence vers la zone de recherche des faisceaux lumineux respectivement émis par les projecteurs de recherche dont la source lumineuse est sélectivement activée.

L'équipement d'éclairage comporte avantageusement un appareillage de commande, qui comprend un organe de commande à choix multiples formant l'organe de commande d'éclairage fonctionnel qui est générateur de la commande d'éclairage fonctionnel. La commande d'éclairage fonctionnel est relative à la mise en oeuvre sélective d'une fonctionnalité de l'équipement d'éclairage parmi une pluralité de fonctionnalités d'éclairage prédéfinies.

Les fonctionnalités d'éclairage comprennent notamment au moins une fonctionnalité d'éclairage en atterrissage, une fonctionnalité d'éclairage en recherche et une fonctionnalité d'éclairage en treuillage. L'organe de commande à choix multiples permet à l'opérateur de sélectionner une fonctionnalité d'éclairage pour mettre en oeuvre des projecteurs que comprend l'équipement d'éclairage. Ces projecteurs sont susceptibles d'être exploités alternativement pour plusieurs fonctionnalités d'éclairage, notamment pour au moins la fonctionnalité d'éclairage en recherche et l'une quelconque des autres fonctionnalités d'éclairage procurées par l'équipement d'éclairage, fonctionnalité d'éclairage en atterrissage et fonctionnalité d'éclairage en treuillage notamment. L'organe de commande à choix multiples est un organe de commande induisant une exploitation sélective d'un ou de plusieurs projecteurs parmi l'ensemble des projecteurs que comprend l'équipement d'éclairage. Une telle exploitation sélective des projecteurs est provoquée par les moyens de commande en fonction de la commande d'éclairage fonctionnel générée, qui déterminent le ou les projecteurs à mettre en oeuvre selon la fonctionnalité d'éclairage sélectionnée par l'opérateur à partir de l'organe de commande à choix multiples.

L'appareillage de commande comprend aussi un organe de commande principal générateur d'une commande d'éclairage qui est commune à l'ensemble des projecteurs. La commande d'éclairage est relative à une localisation d'une zone de recherche par rapport au point d'origine du référentiel. L'organe de commande principal est en relation avec les dits moyens d'identification auxquels il transmet la commande d'éclairage.

L'organe de commande principal est avantageusement agencé en manche articulé à mobilité multidirectionnelle, tel qu'un levier ou une manette de commande implantable sur l'accoudoir d'un siège. Un tel manche est susceptible d'être aisément accessoirement équipé de l'un au moins d'un dit organe de commande de focalisation, d'un dit organe de commande de dynamique d'éclairage, d'un dit organe de commande en convergence, d'un dit organe de commande de zone et de l'organe de commande à choix multiples. Le manche formant l'organe de commande principal est apte à recevoir aisément les organes de commande complémentaires, qui sont par exemple organisés en bouton de commande ou analogue. Un tel bouton est susceptible d'être agencé en curseur, en chapeau chinois à mobilité multidirectionnelle, ou encore en organe de commande à choix multiples. La manette et les éventuels organes de commande complémentaires dont elle est équipée sont confortablement manipulables par une main d'un opérateur.

Les directions de mobilité individuelle des projecteurs correspondent à une mise en mobilité des projecteurs suivant des orientations respectives concourantes, telles que suivant une orientation en azimut et une orientation en site. De telles directions de mobilité procurent conjointement une mobilité omnidirectionnelle des projecteurs dans l'espace euclidien. Selon une forme avantageuse de réalisation permettant de limiter l'encombrement individuel des projecteurs et de faciliter leur implantation sur la paroi extérieure d'un giravion, les moyens de manoeuvre équipant individuellement chacun des projecteurs comprennent :
*) le châssis qui est équipé de moyens d'entraînement en rotation sur lui-même autour d'un axe de rotation correspondant à une première direction de mobilité du projecteur, notamment affectée à l'orientation du projecteur en azimut, et
*) un support du projecteur qui est équipé de moyens d'entraînement en basculement sur le châssis autour d'un axe de pivot concourant à l'axe de rotation et correspondant à une deuxième direction de mobilité du projecteur, notamment affectée à l'orientation du projecteur en site.

Les moyens d'entraînement en basculement du support constituent avantageusement des moyens d'escamotage du projecteur à l'intérieur du châssis, qui est agencé en réceptacle de logement du support. Les moyens d'escamotage sont des moyens de déplacement du projecteur entre une position escamotée dans laquelle le projecteur est logé à l'intérieur du réceptacle que forme le châssis, et une position déployée dans laquelle le projecteur émerge au moins partiellement hors du réceptacle que forme le châssis. En position escamotée, le projecteur est apte à être exploité pour une fonctionnalité d'éclairage en atterrissage, voire d'éclairage en treuillage.

En position déployée, le projecteur est apte à être exploité pour une fonctionnalité d'éclairage en recherche, voire d'éclairage en treuillage. La mise en oeuvre des moyens d'entraînement en basculement du support est susceptible d'être avantageusement placée sous la dépendance d'une commande d'éclairage fonctionnel, qui est génératrice d'un ordre de commande en escamotage par les moyens de commande.

L'ordre de commande en escamotage provoque un entraînement d'un projecteur ou d'un groupe de projecteurs dont la mise en oeuvre est préalablement sélectionnée par les moyens de commande, selon une commande d'éclairage fonctionnel générée correspondante. Un tel entraînement est relatif à un passage du projecteur ou du groupe de projecteurs entre la position d'escamotage ou inversement la position déployée, selon la commande d'éclairage fonctionnel sélectionnée par l'opérateur au moyen de l'organe de commande à choix multiples.

La présente invention a aussi pour objet une méthode de mise en oeuvre d'un équipement d'éclairage embarqué pour giravion tel qu'il vient d'être décrit. Une telle méthode est adaptée pour procurer une utilisation d'un giravion doté d'un équipement d'éclairage tel que précédemment décrit, pour des missions au cours desquelles des zones à illuminer distantes du giravion sont susceptibles de devoir être éclairées selon diverses fonctionnalités d'éclairage, éclairage en atterrissage, éclairage en recherche et éclairage en treuillage notamment.

Dans sa généralité, une telle méthode d'éclairage est principalement reconnaissable en ce qu'elle comprend :
*) une opération initiale d'émission vers les moyens de commande d'une dite commande d'éclairage fonctionnel à partir de l'entraînement par un opérateur du dit organe de commande d'éclairage fonctionnel. La commande d'éclairage fonctionnel est relative à une sélection d'une fonctionnalité de l'équipement d'éclairage à mettre en oeuvre parmi une pluralité de fonctionnalités d'éclairage prédéfinies, dont notamment au moins une fonctionnalité d'éclairage en atterrissage, une fonctionnalité d'éclairage en recherche et une fonctionnalité d'éclairage en treuillage. A partir d'une fonctionnalité d'éclairage sélectionnée, les moyens de commande déterminent le ou les projecteurs à activer selon la localisation de leur implantation sur le giravion déterminée par la fonctionnalité d'éclairage spécifique auxquelles les projecteurs sont affectés.
*) une opération d'activation sélective par les moyens de commande de la source lumineuse de l'un au moins des projecteurs exploités pour la fonctionnalité d'éclairage sélectionnée à partir de la commande d'éclairage fonctionnel. Une telle opération d'éclairage sélective est susceptible d'être associée à un ordre de commande en escamotage, qui provoque une manoeuvre en position déployée du ou des projecteurs dont les sources lumineuses respectives sont sélectivement activées.
*) le cas échéant si la fonctionnalité d'éclairage sélectionnée est une fonctionnalité d'éclairage en recherche :
   a) une opération d'identification d'une dite zone de recherche par les moyens d'identification, à partir d'un entraînement par l'opérateur de l'organe de commande de commande principal émetteur d'une commande d'éclairage, et
   b) une opération d'entraînement individuel des projecteurs dont la source lumineuse est activée, qui induit une mise en convergence des faisceaux lumineux que ces projecteurs émettent respectivement vers la zone de recherche préalablement identifiée.

De préférence, la méthode comprend au moins une opération de commande issue de l'entraînement par l'opérateur d'un organe de commande complémentaire correspondant, parmi les opérations de commande génératrices d'ordres de commande comprenant des dits ordres de focalisation, des dits ordres de dynamique d'éclairage, des dits ordres en convergence et des dits ordres de zone.

L'opération de commande comprenant une génération d'ordres en convergence, les entraînements individuels des projecteurs provoqués par les moyens de coordination induisent sur au moins une zone de recherche une mise en convergence des projections des faisceaux lumineux respectivement émis par un groupe de projecteurs dont la source lumineuse est activée par les moyens de coordination. La zone de recherche correspond à la zone à illuminer qui est distante de l'équipement d'éclairage. La mise en convergence des projections des faisceaux lumineux est avantageusement induite selon l'une quelconque des géométries de chevauchement de ces projections suivantes :
*) un chevauchement total de l'ensemble des projections. La zone de recherche est au moins partiellement, sinon totalement couverte conjointement par l'ensemble des projections, avec une illumination optimisée pour une zone de recherche de surface d'étendue restreinte.
*) un chevauchement partiel entre au moins deux projections. La zone de recherche est au moins partiellement, sinon totalement couverte par le chevauchement partiel des projections et par les reliquats individuels de chacune des projections qui sont situés en périphérie du chevauchement partiel. La zone de recherche est fortement illuminée sur une surface d'étendue restreinte, et est faiblement illuminée en périphérie du chevauchement partiel. L'étendue globale de la zone de recherche illuminée est optimisée.
*) une pluralité de chevauchements partiels entre au moins trois projections. La zone de recherche est au moins partiellement, sinon totalement couverte par un chevauchement partiel commun à au moins deux sinon trois des projections, par au moins un chevauchement partiel secondaire commun à au moins deux projections prises deux à deux, et par les reliquats individuels de chacune des projections qui sont situés en périphérie du chevauchement partiel secondaire. L'étendue globale de la zone de recherche est optimisée en étant fortement illuminée sur une étendue restreinte correspondant au chevauchement partiel commun, très illuminée sur une surface d'étendue modérée correspondant à au moins un chevauchement partiel secondaire, et faiblement illuminée par les reliquats individuels de chacune des projections en périphérie du chevauchement partiel secondaire au moins.

La faculté offerte d'une mise en chevauchement sur la zone de recherche des projections des faisceaux lumineux respectivement émis par les projecteurs est plus particulièrement exploitée pour une fonctionnalité d'éclairage en recherche. De telles modalités d'éclairage par mise en chevauchement des projections sur la zone de recherche sont aussi susceptibles d'être avantageusement exploitées pour l'éclairage d'une zone d'atterrissage et/ou d'une zone de treuillage.

Des exemples de réalisation de la présente invention vont être décrits en relation avec les figures des planches annexées, dans lesquelles :
Les fig.1 et fig.2 sont des illustrations d'un giravion doté d'un équipement d'éclairage de la présente invention, respectivement en vue de face et en vue latérale.
Les fig.3 et fig.6 sont des schémas illustrant diverses modalités de mise en oeuvre d'un équipement d'éclairage dont est doté le giravion représenté sur les fig.1 et fig.2.
La fig.7 est un schéma illustrant des moyens de commande que comporte l'équipement d'éclairage dont est doté le giravion illustré sur les fig.1 et fig.2.
La fig.8 est une illustration en perspective d'un projecteur que comprend l'équipement d'éclairage dont est doté le giravion représenté sur les fig.1 et fig.2.

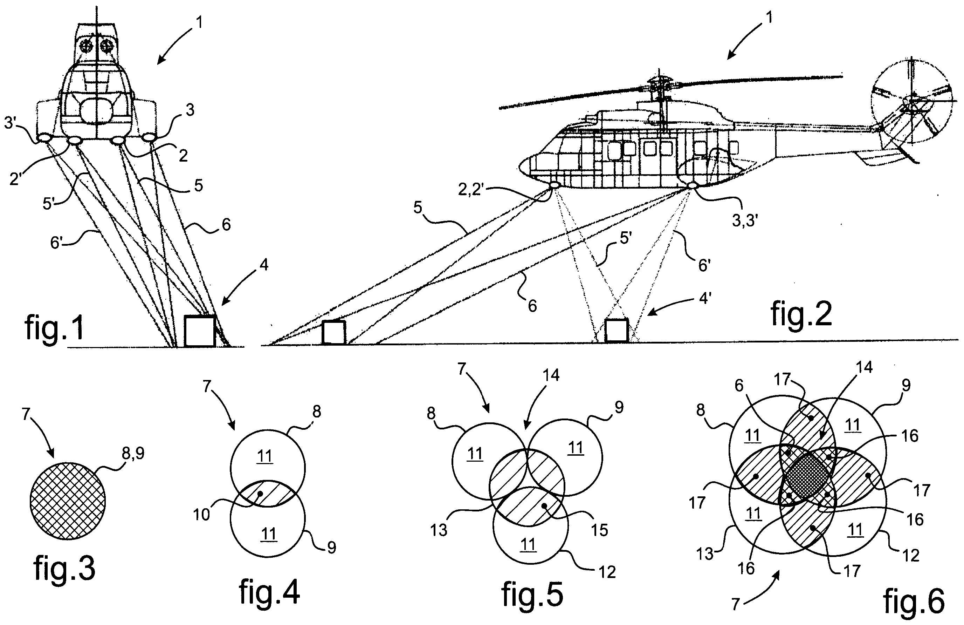

Sur les fig.1 et fig.2, un giravion 1 est doté d'un équipement d'éclairage embarqué pour éclairer son environnement extérieur, et plus particulièrement une ou plusieurs zones distantes du giravion. L'équipement d'éclairage est organisé pour procurer plusieurs fonctions d'éclairage, dont une fonction d'éclairage en atterrissage, une fonction d'éclairage en recherche et une fonction d'éclairage en treuillage. L'ensemble de ces fonctions d'éclairage est procurée par un jeu de projecteurs 2,2',3,3' que comprend l'équipement d'éclairage, dont des projecteurs d'atterrissage 2,2' affectés à la fonction d'éclairage en atterrissage et des projecteurs de treuillage 3,3' affectés à la fonction d'éclairage en treuillage.

Les projecteurs 2,2',3,3' sont implantés sur une paroi extérieure du giravion 1 en étant répartis à distance les uns des autres, et sont au nombre de quatre sur l'exemple de réalisation du giravion illustré. Deux projecteurs d'atterrissage 2,2' sont latéralement répartis à l'avant du giravion 1, et deux projecteurs de treuillage 3,3' sont latéralement répartis à l'arrière du giravion 1. Les puissances individuelles des projecteurs 2,2',3,3' sont à apprécier au regard des puissances qui correspondent habituellement aux fonctions d'éclairage qui leur sont respectivement dédiées, notamment entre la fonction d'éclairage en atterrissage pour les projecteurs d'atterrissage 2,2' et la fonction d'éclairage en treuillage pour les projecteurs de treuillage 3,3'.

La fonction d'éclairage en recherche est procurée à partir de l'exploitation d'au moins deux, sinon trois et de préférence les quatre projecteurs 2,2',3,3' que comprend l'équipement d'éclairage. Pour éclairer une zone de recherche, deux projecteurs peuvent être utilisés, tels que par exemple un projecteur en atterrissage 2 et un projecteur en treuillage 3. Les projecteurs 2,2',3,3' sélectivement mis en oeuvre pour la fonction d'éclairage en recherche, sont déterminés par des moyens de commande que comprend l'équipement d'éclairage. Sur les exemples de mise en oeuvre de la fonction d'éclairage en recherche illustrés sur les fig.1 et fig.2, les quatre projecteurs 2,2',3,3' sont exploités pour optimiser l'éclairage et/ou le nombre de zones de recherche 4,4' à illuminer. \

Sur la fig.1 les quatre projecteurs 2,2',3,3' sont exploités, en étant orientés vers une même zone de recherche 4 à éclairer vers laquelle convergent les faisceaux lumineux 5,5',6,6' qu'ils émettent respectivement.

Sur la fig.2 les quatre projecteurs 2,2',3,3' sont répartis par groupes de deux projecteurs 2,3 et 2',3'. Les faisceaux lumineux 5,6 et 5',6' émis par les projecteurs sont orientés vers des zones de recherche 4,4' distinctes, qui leurs sont respectivement affectés deux à deux par les moyens de commande. Chaque jeu de projecteurs 2,2',3,3' comprend un phare en atterrissage 2,2' et un phare de treuillage 3,3', mais diverses combinaisons d'exploitation des projecteurs 2,2',3,3' pour la fonction d'éclairage en recherche sont susceptibles d'être exploitées, selon le nombre et/ou l'illumination souhaitée de la ou des zones de recherche 4,4'.

Sur les fig.3 à fig.6, une zone de recherche 7 est susceptible d'être diversement illuminée par un giravion de la présente invention.

Sur la fig.3, la totalité des faisceaux lumineux qui sont individuellement émis par les projecteurs de recherche, au moins au nombre de deux, convergent vers la zone de recherche 7. Les projections 8,9 respectives des faisceaux lumineux sur la zone de recherche 7 sont en chevauchement total. La zone de recherche 7 est fortement illuminée sur une surface peu étendue.

Sur la fig.4, deux projecteurs sont utilisés pour éclairer la zone de recherche 7, vers laquelle convergent les faisceaux lumineux qu'ils émettent respectivement. Les projections 8,9 des faisceaux lumineux sur la zone de recherche 7 sont en chevauchement partiel. La zone de recherche 7 est éclairée sur une surface modérément étendue, en étant modérément illuminée dans la zone d'éclairage correspondante au chevauchement partiel 10, et faiblement illuminée dans la zone d'éclairage correspondante aux reliquats 11 des projections 8,9.

Sur les fig.5 et fig.6, quatre projecteurs sont exploités pour éclairer la zone de recherche 7, vers laquelle convergent les faisceaux lumineux que les projecteurs émettent respectivement.

Sur la fig.5, la surface globale de la zone de recherche 7 couverte par les projections 8,9,12,13 des faisceaux lumineux est optimisée, en étant fortement illuminée sur une zone centrale 14 modérément étendue. La zone centrale 14 de la zone de recherche 7 est couverte en chevauchement partiel 15 par la totalité d'une projection de l'un faisceau lumineux 13, et partiellement par chacune des projections 8,9,12 des autres faisceaux lumineux. En périphérie de la zone centrale 14, les reliquats 11 des projections 8,9,12 des dits autres faisceaux lumineux éclairent la zone de recherche 7 avec une faible illumination sur une surface très étendue.

Sur la fig.6, l'ensemble des projections 8,9,12,13 respectives des faisceaux lumineux sur la zone de recherche 7 sont en chevauchement partiel sur une zone d'éclairage centrale 14, qui est faiblement étendue et fortement illuminée. En périphérie de cette zone centrale 14, des reliquats immédiats 16 des projections 8,9,12,13 des faisceaux lumineux, prises trois à trois, éclairent la zone de recherche 7 dans une zone périphérique immédiate faiblement étendue avec une forte illumination. En périphérie de la zone périphérique immédiate, des reliquats intermédiaires 17 des projections 8,9,12,13 des faisceaux lumineux, prises deux à deux, éclairent la zone de recherche 7 dans une zone périphérique intermédiaire avec une illumination modérée sur une surface étendue. En périphérie de la zone périphérique intermédiaire, des reliquats 11 périphériques des projections 8,9,12,13 des faisceaux lumineux, éclairent isolément la zone de recherche 7 dans une zone périphérique distante, avec une faible illumination sur une surface modérément étendue.

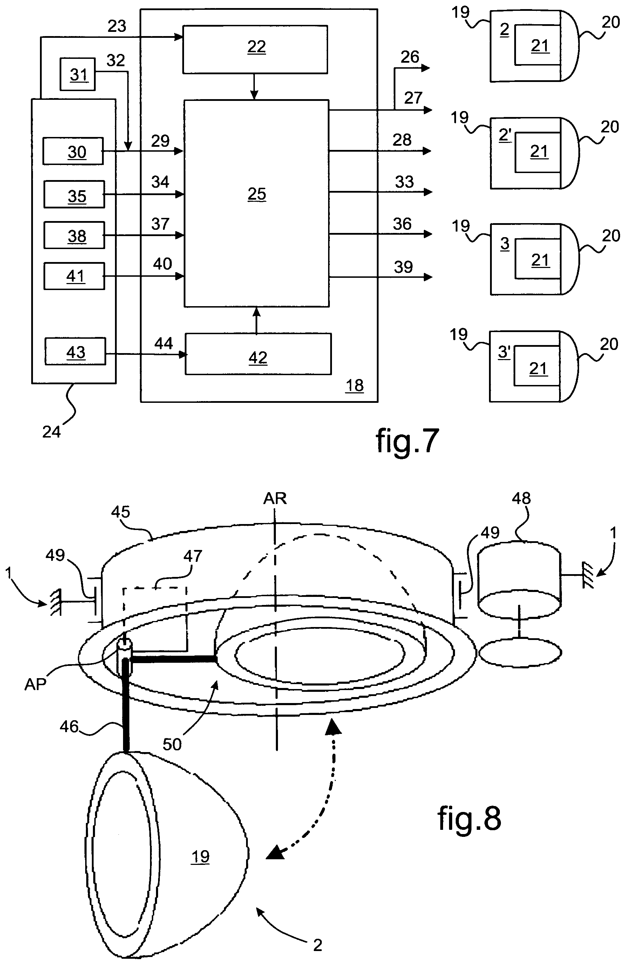

Sur la fig.7, l'équipement d'éclairage dont est doté le giravion représenté sur les fig.1 et fig.2, comporte des moyens de commande 18 de la mise en oeuvre des projecteurs 2,2',3,3'. Les projecteurs 2,2',3,3' comportent chacun un boîtier 19 logeant un module d'éclairage comprenant une source lumineuse 20 et un système optique 21. Les moyens de commande 18 comprennent des moyens d'identification 22 de la zone de recherche à illuminer, à partir d'une commande d'éclairage en recherche 23 qui est générée par un organe de commande principal 24 entraîné par l'homme. Les moyens d'identification 22 sont des moyens de calcul qui identifient la zone de recherche à éclairer à partir de la commande d'éclairage en recherche 23, en fonction de la position relative des différents projecteurs 2,2',3,3' entre eux par rapport à un référentiel R déterminé. La zone de recherche est identifiée par rapport au point d'origine O du référentiel R. Les positions respectives des différents projecteurs 2,2',3,3' sur le giravion, sont définies par rapport au point d'origine O du référentiel R. Les moyens de commande 18 comprennent aussi des moyens de coordination 25, qui provoquent une mise en oeuvre individuelle et sélective des projecteurs 2,2',3,3' selon leur position par rapport au point d'origine O, et selon la localisation de la zone de recherche identifiée par les moyens d'identification 22. Les moyens de coordination 25 génèrent un ordre d'activation sélective 26 des sources lumineuses 20 que comportent les projecteurs 2,2',3,3', pour induire l'émission de faisceaux lumineux par au moins deux projecteurs. Les moyens de coordination 25 génèrent aussi des ordres d'entraînement individuel 27 en mobilité des projecteurs 2,2',3,3' dont la source lumineuse 20 est activée, pour les orienter conjointement vers la zone de recherche en fonction de leur position respective par rapport au point d'origine O du référentiel R. L'orientation conjointe des projecteurs 2,2',3,3' induit une mise en convergence, vers la zone de recherche identifiée, des faisceaux lumineux que les projecteurs 2,2',3,3' émettent respectivement.

Les moyens de coordination 25 comprennent des moyens complémentaires de calcul, dont la mise en oeuvre est individuellement placée sous la dépendance d'organes de commande complémentaires respectifs qui sont entraînés par l'homme. Les organes de commande complémentaires sont avantageusement implantés sur l'organe de commande principal 24 pour faciliter leur entraînement par l'opérateur avec l'une de ses mains. Par exemple, les moyens de coordination 25 sont générateurs d'ordres de focalisation 28 individuelle des projecteurs 2,2',3,3', à partir d'une commande d'éclairage de focalisation 29 générée par un organe de commande de focalisation 30. La commande d'éclairage en focalisation 29 est aussi susceptible d'être générée par des moyens de mesure 31 appropriés équipant le giravion, qui sont aptes à générer une information 32 relative à la distance de séparation entre le giravion et la zone de recherche. Les ordres de focalisation 28 provoquent l'activation d'actionneurs affectés au réglage de la distance focale des projecteurs 2,2',3,3', en intervenant sur le système optique 21 qu'ils comportent. Par exemple encore, les moyens de coordination 25 sont générateurs d'ordres de dynamique d'éclairage 33 qui sont relatifs à un entraînement individuel des projecteurs 2,2',3,3' soit vers une position fixe, soit selon une dynamique permettant d'éclairer une zone de recherche mouvante entre deux orientations limites des projecteurs qui sont définies par rapport au référentiel R. Les ordres de dynamique d'éclairage 33 sont issus d'une commande d'éclairage de dynamique 34, qui est générée par un organe de commande de dynamique d'éclairage 35 entraîné par l'homme. Par exemple encore, les moyens de coordination 25 sont générateurs d'ordres en convergence 36, qui sont relatifs aux modalités de mise en chevauchement des projections des faisceaux lumineux émis par les projecteurs 2,2',3,3'. Les ordres en convergence 36 sont issus d'une commande d'éclairage en convergence 37, qui est générée par un organe de commande en convergence 38 entraîné par l'homme. Par exemple encore, les moyens de coordination 25 sont générateurs d'ordres de zone 39, qui sont relatifs au nombre de zones de recherche à éclairer simultanément et distinctement. Les ordres de zone 39 sont issus d'une commande d'éclairage de zone 40, qui est générée par un organe de commande de zone 41 entraîné par l'homme.

Les moyens de commande 18 comprennent aussi des moyens de fonctionnalité 42, induisant une mise en oeuvre sélective des projecteurs 2,2',3,3' en fonction d'une commande de fonctionnalité d'éclairage requise par un opérateur. Les projecteurs 2,2',3,3' sont répartis sur le giravion entre deux fonctions d'éclairage qui leurs sont respectivement spécifiques, fonction d'éclairage en atterrissage et fonction d'éclairage en treuillage. Les projecteurs 2,2',3,3' sont sélectivement exploités pour la fonction d'éclairage en recherche, à partir des ordres d'éclairage 23 générés par les moyens de commande 18, moyens de coordination 25 plus particulièrement. La mise en oeuvre des moyens de fonctionnalité 42 est placée sous la dépendance d'un organe de commande à choix multiples 43 ou analogue, qui est entraîné par l'homme et qui est avantageusement implanté sur l'organe de commande principal 24. L'organe de commande à choix multiples 43 génère une commande d'éclairage fonctionnel 44, qui est relative à la mise en oeuvre sélective d'une fonctionnalité d'éclairage. L'organe de commande à choix multiples 43 est un organe de sélection par un opérateur d'une fonctionnalité d'éclairage à mettre en oeuvre, entre la fonctionnalité d'éclairage en atterrissage, la fonctionnalité d'éclairage en recherche et la fonctionnalité d'éclairage en treuillage. A partir d'une commande d'éclairage fonctionnel 44, les moyens de coordination 25 génèrent les ordres d'activation 26 et les ordres d'entraînement 27 selon la fonctionnalité d'éclairage préalablement sélectionnée par l'opérateur.

Sur la fig.8, chacun des projecteurs est implanté à la paroi extérieure du giravion en mobilité multidirectionnelle autour de deux axes concourants. Le boîtier 19 que comporte le projecteur 2 représenté, est porté par un châssis 45 par l'intermédiaire d'un support 46 qui est agencé en bras. Le support 46 est monté basculant sur le châssis 45 autour d'un axe de pivot AP, entre une position escamotée du projecteur 2 à l'intérieur du châssis 45 et une position déployée dans laquelle le projecteur 2 émerge au moins partiellement hors du châssis 45. Le support 46 est manoeuvrable en basculement autour de l'axe de pivot AP, par l'intermédiaire de moyens d'entraînement 47 du support 46 qui permettent d'orienter le projecteur 2 en site par rapport au giravion 1. Le châssis 45 est monté mobile en rotation sur lui-même autour d'un axe de rotation AR, pour orienter le projecteur 2 en azimut par rapport au giravion 1. Le châssis 45 est avantageusement logé dans une cavité que comporte une paroi extérieure du giravion 1, et est équipé de moyens d'entraînement 48 en rotation sur lui-même autour de l'axe de rotation AR. Le châssis 45 est notamment conformé en tube cylindrique préférentiellement borgne ou analogue, dont la paroi extérieure est guidée par des organes de roulement 49 qui sont interposés entre le châssis 45 et la paroi extérieure du giravion 1 qui le reçoit. L'évidement intérieur que comporte le tube formant le châssis 45, ménage un réceptacle 50 de logement du projecteur 2 en position escamotée. Les moyens d'entraînement 47,48 respectivement du châssis 45 en rotation et du support 46 en basculement, sont notamment formés d'actionneurs tournants électriques, qui sont associés à des moyens de transmission de mouvement. La mise en oeuvre des moyens d'entraînement 47,48 est placée sous la dépendance des ordres d'entraînement générés par les moyens de coordination.

## Revendications

1. Giravion (1) doté d'un équipement d'éclairage embarqué de son environnement extérieur, l'équipement d'éclairage comportant une pluralité de dispositifs d'éclairage de zones à illuminer spécifiques et distantes du giravion (1), dont au moins un dispositif d'éclairage en atterrissage, un dispositif d'éclairage en recherche et un dispositif d'éclairage en treuillage, chacun des dispositifs d'éclairage comprenant au moins un projecteur (2, 2', 3, 3') comportant un boîtier (19) qui loge un module d'éclairage comprenant un système optique (21) et une source lumineuse (20), et des moyens de commande (18) de l'émission d'un faisceau lumineux (5, 5',6 ,6') par le projecteur (2, 2', 3, 3'), le dispositif d'éclairage en recherche comprenant au moins un projecteur de recherche qui est monté mobile sur le giravion (1) et qui est équipé de moyens de manoeuvre (48, 47) en azimut et en site par rapport au giravion (1), les moyens de manoeuvre (48, 47) étant mis en oeuvre par des moyens de commande en recherche (18) à partir d'une commande d'éclairage en recherche (23) d'une zone de recherche (4, 4',7) à illuminer, qui est générée par au moins un organe de commande de recherche entraîné par l'homme,
**caractérisé en ce que** les projecteurs de recherche (2, 2', 3, 3') du dispositif d'éclairage en recherche, sont composés d'au moins deux projecteurs que comprennent les autres dispositifs d'éclairage que comporte l'équipement d'éclairage, les projecteurs (2, 2', 3, 3') de l'équipement d'éclairage étant répartis sur le giravion (1) selon au moins deux fonctions d'éclairage spécifiques aux dits autres dispositifs d'éclairage, la fonction d'éclairage en recherche étant procurée à partir d'une commande d'éclairage en recherche (23) commune à l'ensemble des projecteurs de recherche, et à partir d'une mise en oeuvre sélective par les moyens de commande (18) des projecteurs (2, 2', 3, 3') que comporte l'équipement d'éclairage.

2. Giravion selon la revendication 1,
**caractérisé en ce que** les moyens de commande en recherche (18) comprennent :
*) des moyens d'identification (22), à partir d'une commande d'éclairage en recherche (23) commune à l'ensemble des projecteurs de recherche (2, 2', 3, 3'), d'une zone de recherche (4, 4', 7) à illuminer par rapport à un référentiel (R) déterminé au regard d'un point d'origine (O) localisé sur le giravion (1) et par rapport aux positions respectives sur le giravion (1) des projecteurs de recherche (2, 2', 3, 3') au regard du référentiel (R), et
*) des moyens de coordination (25) de la mise en oeuvre individuelle des projecteurs de recherche (2, 2', 3, 3'), qui provoquent une mise en convergence vers la zone de recherche (4,4',7) des faisceaux lumineux (5, 5', 6, 6') respectivement émis par les projecteurs de recherche (2, 2', 3, 3') dont la source lumineuse (20) est sélectivement activée.

3. Giravion selon la revendication 2,
**caractérisé en ce que** les moyens de coordinations (25) sont générateurs d'ordres d'activation (26) sélective des sources lumineuses (20) des projecteurs de recherche (2, 2', 3, 3'), et d'ordres d'entraînement (27) individuel des projecteurs de recherche (2, 2, 3, 3') vers la zone de recherche (4, 4',7) qui provoquent l'activation individuelle des moyens de manoeuvre (47, 48) équipant respectivement les projecteurs de recherche (2, 2', 3, 3') en induisant la convergence vers la zone de recherche (4, 4',7) des faisceaux lumineux (5, 5', 6, 6') respectivement émis par les projecteurs de recherche (2, 2', 3, 3') dont la source lumineuse (20) est sélectivement activée.

4. Giravion selon l'une quelconque des revendications 2 et 3,
**caractérisé en ce que** les moyens de coordination (25) sont générateurs d'ordres de focalisation (28) individuelle des projecteurs de recherche (2, 2', 3, 3'), qui sont issus d'une commande d'éclairage de focalisation (29, 32) générée indifféremment par un organe de commande de focalisation (30) entraîné par l'homme ou par des moyens de mesure (31) de la distance de séparation entre le giravion (1) et la zone de recherche (4, 4', 7), les ordres de focalisation (28) étant relatifs à une distance de séparation individuelle entre les projecteurs de recherche (2, 2', 3, 3") et la zone de recherche (4, 4', 7) et provoquant l'activation d'un actionneur du système optique (21) des projecteurs de recherche (2, 2', 3, 3') modifiant leur distance focale.

5. Giravion selon l'une quelconque des revendications 2 à 4,
**caractérisé en ce que** les moyens de coordination (25) sont générateurs d'ordres de dynamique d'éclairage (33) qui sont relatifs à un entraînement individuel des projecteurs de recherche (2, 2', 3, 3') en convergence vers la zone de recherche (4, 4', 7), sélectivement soit en une position fixe soit selon un entraînement continu d'éclairage d'une zone de recherche (4, 4', 7) mouvante définie par rapport au référentiel (R), les ordres de dynamique d'éclairage (33) étant issus d'une commande d'éclairage de dynamique (34) générée par un organe de commande de dynamique d'éclairage (35) entraîné par l'homme.

6. Giravion selon la revendication 5,
**caractérisé en ce que** les ordres de dynamique d'éclairage (33) intègrent des ordres de vitesse de balayage de la zone de recherche mouvante, qui sont générés par les moyens de coordination (25) en étant issus d'une commande d'éclairage de vitesse de balayage générée par un organe de commande de vitesse de balayage qui est entraîné par l'homme et qui équipe l'organe de commande de dynamique d'éclairage (35).

7. Giravion selon l'une quelconque des revendications 2 à 6,
**caractérisé en ce que** les moyens de coordination (25) sont générateurs d'ordres en convergence (36) qui sont relatifs à un entraînement des projecteurs (2, 2', 3, 3') sélectivement soit en chevauchement total soit en chevauchement partiel des projections (8, 9, 12, 13) sur la zone de recherche (7) des faisceaux lumineux (5, 5', 6, 6') respectivement émis par les projecteurs (2, 2', 3, 3'), les ordres en convergence (36) étant issus d'une commande d'éclairage en convergence (37) générée par un organe de commande en convergence (38) entraîné par l'homme.

8. Giravion selon l'une quelconque des revendications 2 à 7,
**caractérisé en ce que** les moyens de coordination (25) sont générateurs d'ordres de zones (39) qui sont relatifs à un entraînement des projecteurs (2, 2', 3, 3') sélectivement vers plusieurs zones de recherche (4,4') qui leur sont respectivement affectées, les ordres de zone (39) étant issus d'une commande d'éclairage de zones (40) générée par un organe de commande de zone (41) entraîné par l'homme.

9. Giravion selon l'une quelconque des revendications 1 à 8,
**caractérisé en ce que** l'équipement d'éclairage embarqué du giravion (1) comprend le boîtier (19) qui est équipé de moyens de montage en mobilité sur un châssis (45) et lesdits moyens de manoeuvre (47, 48) sont mis en oeuvre pour la manoeuvre des projecteurs (2, 2', 3, 3') suivant au moins deux axes (AP, AR) de mobilité concourants, les moyens de commande (18) intégrant des moyens d'identification (22) à partir de la commande d'éclairage (23) d'une zone à illuminer, la zone à illuminer correspondant à une zone de recherche (4, 4',7) distante de l'équipement par rapport à un référentiel (R) préalablement établi au regard d'un point d'origine (O) considéré, l'équipement d'éclairage comprenant des moyens de coordination (25) de la mise en oeuvre individuelle des projecteurs de recherche (2, 2', 3, 3') qui provoquent une mise en convergence vers la zone de recherche (4, 4', 7) des faisceaux lumineux (5, 5', 6, 6') respectivement émis par les projecteurs de recherche (2, 2', 3, 3') dont la source lumineuse (20) est sélectivement activée, l'organe de commande de l'équipement d'éclairage étant compris dans un appareillage de commande et comprend un organe de commande à choix multiples (43) d'éclairage fonctionnel, l'organe de commande à choix multiples (43) étant générateur d'une commande d'éclairage fonctionnel (44) relative à la mise en oeuvre sélective d'une fonctionnalité de l'équipement parmi une pluralité de fonctionnalités d'éclairage prédéfinies.

10. Giravion selon la revendication 9,
**caractérisé en ce que** l'organe de commande d'éclairage fonctionnel est générateur d'une commande d'éclairage fonctionnel (44) relative à la mise en oeuvre sélective d'une fonctionnalité de l'équipement parmi au moins une fonctionnalité d'éclairage en atterrissage, une fonctionnalité d'éclairage en recherche et une fonctionnalité d'éclairage en treuillage.

11. Giravion selon la revendication 10,
**caractérisé en ce que** l'appareillage de commande comprend un organe de commande principal (24) générateur d'une commande d'éclairage (23) qui est commune à l'ensemble des projecteurs (2, 2', 3, 3') et qui est relative à une localisation d'une zone de recherche (4, 4', 7) par rapport au point d'origine (O) du référentiel (R), l'organe de commande principal (24) étant en relation avec les dits moyens d'identification (22) auxquels ledit organe de commande principal (24) transmet la commande d'éclairage (23).

12. Giravion selon la revendication 11,
**caractérisé en ce que** l'organe de commande principal (24) est agencé en manche articulé à mobilité multidirectionnelle, qui est accessoirement équipé de l'un au moins d'un dit organe de commande de focalisation (30), d'un dit organe de commande de dynamique d'éclairage (35), d'un dit organe de commande en convergence (38), d'un dit organe de commande de zone (41) et de l'organe de commande à choix multiples (43).

13. Giravion selon l'une quelconque dès revendications 9 à 12,
**caractérisé en ce que** les moyens de manoeuvre équipant individuellement chacun des projecteurs (2, 2', 3, 3') comprennent :
*) le châssis (45) qui est équipé de moyens d'entraînement (47) en rotation sur lui-même autour d'un axe de rotation (AR) correspondant à une première direction de mobilité du projecteur (2, 2', 3, 3'), et
*) un support (46) du projecteur (2, 2', 3, 3') qui est équipé de moyens d'entraînement (48) en basculement sur le châssis (45) autour d'un axe de pivot (AP) concourant à l'axe de rotation (AR) et correspondant à une deuxième direction de mobilité du projecteur (2, 2', 3, 3').

14. Giravion selon la revendication 13,
**caractérisé en ce que** les moyens d'entraînement (47) en basculement du support (46) constituent des moyens d'escamotage du projecteur (2, 2', 3, 3') à l'intérieur du châssis (45), qui est agencé en réceptacle de logement du support (46).

15. Méthode de mise en oeuvre d'un équipement d'éclairage équipant un giravion,
**caractérisée en ce que** l' équipement d'éclairage est conforme à l'une quelconque des revendications 9 à 14 et la méthode comprend :
*) une opération initiale d'émission vers les moyens de commande (18) d'une dite commande d'éclairage fonctionnel (44) à partir de l'entraînement par un opérateur du dit organe de commande d'éclairage fonctionnel (43),
*) une opération d'activation sélective par les moyens de commande (18) de la source lumineuse (20) de l'un au moins des projecteurs (2, 2', 3, 3') exploités pour la fonctionnalité d'éclairage sélectionnée à partir de la commande d'éclairage fonctionnel (44), et
*) le cas échéant si la fonctionnalité d'éclairage sélectionnée est une fonctionnalité d'éclairage en recherche, une opération d'identification d'une dite zone de recherche (4, 4', 7) par les moyens d'identification (22), à partir d'un entraînement par l'opérateur de l'organe de commande principal (24) émetteur d'une commande d'éclairage (23), et une opération d'entraînement individuel des projecteurs (2, 2', 3, 3') dont la source lumineuse (20) est activée, induisant une mise en convergence des faisceaux lumineux (5, 5', 6, 6') qu'ils émettent respectivement vers la zone de recherche (4, 4', 7) préalablement identifiée.

16. Méthode selon la revendication 15,
**caractérisée en ce qu'**elle comprend au moins une opération de commande issue de l'entraînement par l'opérateur d'un organe de commande correspondant, parmi les opérations de commande génératrices d'ordres de commande comprenant des dits ordres de focalisation (28), des dits ordres de dynamique d'éclairage (33), des dits ordres en convergence (36) et des dits ordres de zone (39).

17. Méthode selon la revendication 16,
**caractérisée en ce que** l'opération de commande comprenant une génération d'ordres en convergence (36), les entraînements individuels des projecteurs (2, 2', 3, 3') provoqués par les moyens de coordination (25) induisent sur au moins une zone de recherche (7) une mise en convergence des projections (8, 9, 12, 13) des faisceaux lumineux (5, 5', 6, 6') respectivement émis par un groupe de projecteurs (2, 2', 3, 3') dont la source lumineuse (20) est activée par les moyens de coordination (25), selon l'une quelconque des géométries de chevauchement de ces projections (8, 9, 12, 13) suivantes :
*) un chevauchement total de l'ensemble des projections (8, 9, 12, 13).
*) un chevauchement partiel (10, 15, 16, 17) entre au moins deux projections (8, 9, 12, 13).
*) une pluralité de chevauchements partiels (14, 16, 17) entre au moins trois projections (8, 9, 12, 13).

## Patentansprüche

1. Drehflügelflugzeug (1) mit einer Bordausrüstung zur Beleuchtung seiner äußeren Umgebung, wobei die Beleuchtungsausrüstung eine Mehrzahl von Vorrichtungen zur Beleuchtung von spezifischen, von dem Drehflügelflugzeug (1) entfernten, zu beleuchtenden Bereichen aufweist, worunter sich mindestens eine Landungsbeleuchtungsvorrichtung, eine Suchbeleuchtungsvorrichtung und eine Vorrichtung der Beleuchtung einer Bergung mit einer Winde befinden, wobei jede der Beleuchtungsvorrichtungen mindestens einen Scheinwerfer (2, 2', 3, 3') mit einem Gehäuse (19), das ein Beleuchtungsmodul aufnimmt, mit einem optischen System (21) und einer Lichtquelle (20), und Mittel (18) zur Steuerung der Abstrahlung eines Lichtstrahls (5, 5', 6, 6') durch den Scheinwerfer (2, 2', 3, 3') aufweist, wobei die Suchbeleuchtungsvorrichtung mindestens einen Suchscheinwerfer aufweist, der beweglich an dem Drehflügelflugzeug (1) montiert ist und der ausgerüstet ist mit Mitteln (48, 47) in Azimutrichtung und relativ zu dem Drehflügelflugzeug (1), wobei die Bewegungsmittel (48, 47) durch Suchsteuerungsmittel (18) ausgehend von einem Suchbeleuchtungsbefehl (23) eines zu beleuchtenden Untersuchungsbereichs (4, 4', 7), der von mindestens einem Suchsteuerungselement erzeugt wird, das von einer Person betätigt wird, in Betrieb gesetzt werden,
**dadurch gekennzeichnet, dass** die Suchscheinwerfer (2, 2', 3, 3') der Suchbeleuchtungsvorrichtung aus mindestens zwei Scheinwerfern zusammengesetzt sind, die die anderen Beleuchtungsvorrichtungen, die die Beleuchtungsausrüstung aufweist, beinhalten, wobei die Scheinwerfer (2, 2', 3, 3') der Beleuchtungsausrüstung auf dem Drehflügelflugzeug (1) gemäß mindestens zwei den anderen Beleuchtungsvorrichtungen eigenen Beleuchtungsfunktionen verteilt sind, wobei die Suchbeleuchtungsfunktion bereitgestellt wird ausgehend von einer Suchbeleuchtungssteuerung (23), die der Gesamtheit der Suchscheinwerfer gemeinsam ist, und ausgehend von einem selektiven Einsatz von Scheinwerfern (2, 2', 3, 3'), die die Beleuchtungsausrüstung aufweist, durch die Steuerungsmittel (18).

2. Drehflügelflugzeug nach Anspruch 1,
**dadurch gekennzeichnet, dass** die Suchsteuerungsmittel (18) aufweisen:
*) Mittel (22) zur Identifizierung eines zu beleuchtenden Suchbereichs (4, 4', 7) ausgehend von einer Suchbeleuchtungssteuerung (23), die der Gesamtheit der Suchscheinwerfer (2, 2', 3, 3') gemeinsam ist, relativ zu einem Bezugssystem (R), das mit Bezug auf einen Ursprungspunkt (O), der auf dem Drehflügelflugzeug (1) liegt, und bezüglich der jeweiligen Positionen von Suchscheinwerfer (2, 2', 3, 3') auf dem Drehflügelflugzeug (1) bezüglich des Bezugssystems (R) bestimmt ist, und
*) Mittel (25) zur Koordination des individuellen Einsatzes von Suchscheinwerfern (2, 2', 3, 3'), die ein Konvergieren von Lichtstrahlen (5, 5', 6, 6'), die jeweils von den Suchscheinwerfern (2, 2', 3, 3') ausgesendet werden, deren Lichtquelle (20) selektiv aktiviert ist, auf den Suchbereich (4, 4', 7) bewirken.

3. Drehflügelflugzeug nach Anspruch 2,
**dadurch gekennzeichnet, dass** die Koordinationsmittel (25) selektive Befehle (26) zur Aktivierung von Lichtquellen (20) der Suchscheinwerfer (2, 2', 3, 3') und Befehle (27) zum individuellen Lenken der Suchscheinwerfer (2, 2', 3, 3') auf den Suchbereich (4, 4', 7) erzeugen, die die individuelle Aktivierung von Betätigungsmitteln (47, 48) bewirken, mit denen jeweils die Suchscheinwerfer (2, 2', 3, 3') ausgerüstet sind, indem sie die Konvergenz von Lichtstrahlen (5, 5', 6, 6'), die jeweils von den Suchscheinwerfern (2, 2', 3, 3') ausgestrahlt werden, deren Lichtquelle (20) selektiv aktiviert ist, bewirken.

4. Drehflügelflugzeug nach einem der Ansprüche 2 und 3,
**dadurch gekennzeichnet, dass** die Koordinierungsmittel (25) Erzeuger von individuellen Fokussierungsbefehlen (28) der Suchscheinwerfer (2, 2', 3, 3') sind, die aus einem Beleuchtungsfokussierungsbefehl (29, 32) hervorgehen, der von einem von einer Person betätigten Fokussierungssteuerorgan (30) oder von Mitteln (31) zur Messung des Trennungsabstands zwischen dem Drehflügelflugzeug (1) und dem Suchbereich (4, 4', 7) erzeugt wird, wobei die Fokussierungsbefehle (28) sich auf einen individuellen Trennungsabstand zwischen den Suchscheinwerfern (2, 2', 3, 3') und dem Suchbereich (4, 4', 7) beziehen und die Aktivierung eines Stellorgans des optischen Systems (21) der Suchscheinwerfer (2, 2', 3, 3') bewirken, das deren Fokusabstand verändert.

5. Drehflügelflugzeug nach einem der Ansprüche 2 bis 4,
**dadurch gekennzeichnet, dass** die Koordinierungsmittel (25) dynamische Beleuchtungsbefehle (33) bezüglich eines individuellen Antriebs der Suchscheinwerfer (2, 2', 3, 3') in Konvergenz auf den Suchbereich (4, 4', 7) erzeugen, selektiv entweder in einer festen Stellung oder gemäß einer kontinuierlichen Bewegung der Beleuchtung eines Suchbereichs (4, 4', 7), der relativ zu dem Bezugssystem (R) definiert ist, wobei die dynamischen Beleuchtungsbefehle (33) aus einer dynamischen Beleuchtungssteuerung (34) hervorgehen, die von einem dynamischen Steuerorgan (35) erzeugt werden, das von einer Person betätigt wird.

6. Drehflügelflugzeug nach Anspruch 5,
**dadurch gekennzeichnet, dass** die dynamischen Beleuchtungsbefehle (33) Befehle bezüglich der Abtastgeschwindigkeit des sich bewegenden Suchbereichs umfassen, die von den Koordinierungsmitteln (25) erzeugt werden, indem sie aus einer Beleuchtungssteuerung der Abtastgeschwindigkeit hervorgehen, die erzeugt wird durch ein Organ zur Steuerung der Abtastgeschwindigkeit, das von einer Person betätigt wird, und mit dem das dynamische Beleuchtungssteuerungsorgan (35) ausgerüstet ist.

7. Drehflügelflugzeug nach einem der Ansprüche 2 bis 6,
**dadurch gekennzeichnet, dass** die Koordinierungsmittel (25) Konvergenzbefehle (36) erzeugen, die sich auf einen selektiven Antrieb der Scheinwerfer (2, 2', 3, 3') beziehen, entweder mit totaler Überlappung oder mit teilweiser Überlappung der Projektionen (8, 9, 12, 13) der jeweils von den Scheinwerfern (2, 2', 3, 3') ausgestrahlten Lichtstrahlen (5, 5', 6, 6') in dem Suchbereich (7), wobei die Konvergenzbefehle (36) aus einer Beleuchtungskonvergenzsteuerung (37) hervorgehen, die von einem Konvergenzsteuerungsorgan (38) erzeugt wird, das von einer Person betätigt wird.

8. Drehflügelflugzeug nach einem der Ansprüche 2 bis 7,
**dadurch gekennzeichnet, dass** die Koordinierungsmittel (25) Bereichsbefehle (39) erzeugen, die sich auf eine selektive Lenkung der Scheinwerfer (2, 2', 3, 3') auf mehrere Suchbereiche (4, 4') beziehen, die ihnen jeweils zugeordnet sind, wobei die Bereichsbefehle (39) aus einer Beleuchtungssteuerung (40) von Bereichen hervorgehen, die durch ein von einer Person betätigtes Bereichssteuerungsorgan (41) erzeugt wird.

9. Drehflügelflugzeug nach einem der Ansprüche 1 bis 8,
**dadurch gekennzeichnet, dass** die Bordbeleuchtungsausrüstung des Drehflügelflugzeugs (1) das Gehäuse (19) umfasst, das mit Mitteln zur beweglichen Montage auf einem Rahmen (45) ausgerüstet ist, und die Betätigungsmittel (47, 48) für die Betätigung der Scheinwerfer (2, 2', 3, 3') gemäß mindestens zwei konvergenten Bewegungsachsen (AP, AR) eingesetzt werden, wobei die Steuermittel (18) Identifizierungsmittel (22) eines zu beleuchtenden Bereichs ausgehend von der Beleuchtungssteuerung (23) umfassen, wobei der zu beleuchtende Bereich einem von der Ausrüstung entfernten Suchbereich (4, 4', 7) bezüglich eines Bezugssystems (R) entspricht, das bezüglich eines betrachteten Ursprungspunkts (O) zuvor erstellt wurde, wobei die Beleuchtungsausrüstung Mittel (25) zur Koordinierung der individuellen Betätigung der Suchscheinwerfer (2, 2', 3, 3') aufweist, die ein Konvergieren der Lichtstrahlen (5, 5', 6, 6') auf den Suchbereich (4, 4', 7) bewirken, die jeweils von den Suchscheinwerfern (2, 2', 3, 3'), deren Lichtquelle (2) selektiv aktiviert ist, ausgestrahlt werden, wobei das Steuerungsorgan der Beleuchtungsausrüstung in einer Steuerungsgerätschaft enthalten ist und ein Multiple-Choice-Steuerungsorgan (43) der funktionsgemäßen Beleuchtung aufweist, wobei das Multiple-Choice-Steuerungsorgan (43) eine funktionsgemäße Beleuchtungssteuerung (44) erzeugt, relativ zu einem selektiven Einsatz einer Funktonalität der Ausrüstung aus einer Mehrzahl von vordefinierten Beleuchtungsfunktionalitäten.

10. Drehflügelflugzeug nach Anspruch 9,
**dadurch gekennzeichnet, dass** das Organ der funktionsgemäßen Beleuchtungssteuerung eine funktionsgemäße Beleuchtungssteuerung (44) erzeugt, bezüglich des selektiven Einsatzes einer Funktionalität der Ausrüstung aus mindestens einer Landebeleuchtungsfunktionalität, einer Suchbeleuchtungsfunktionaliät und einer Beleuchtungsfunktionalität einer Bergung mit einer Winde ist.

11. Drehflügelflugzeug nach Anspruch 10,
**dadurch gekennzeichnet, dass** die Steuerungsausrüstung ein Hauptsteuerorgan (24) aufweist, das eine Beleuchtungssteuerung (23) erzeugt, die der Gesamtheit der Scheinwerfer (2, 2', 3, 3') gemeinsam ist, und die sich auf eine Lokalisierung eines Suchbereichs (4, 4', 7) bezüglich des Ursprungspunkts (O) des Bezugssystems (R) bezieht, wobei das Hauptsteuerorgan (24) mit den Identifizierungsmitteln (22) in Verbindung steht, denen das Hauptsteuerorgan (24) die Beleuchtungssteuerung (23) überträgt.

12. Drehflügelflugzeug nach Anspruch 11,
**dadurch gekennzeichnet, dass** das Hauptsteuerorgan (24) als ein in alle Richtungen beweglich angelenkter Griff ausgebildet ist, der zusätzlich mit mindestens einem der folgenden Organe ausgerüstet ist: einem Fokussierungssteuerungsorgan (30), einem Organ (35) der Steuerung der dynamischen Beleuchtung, einem Konvergenzsteuerungsorgan (38), einem Bereichssteuerungsorgan (41) und einem Multiple-Choice-Steuerungsorgan (43).

13. Drehflügelflugzeug nach einem der Ansprüche 9 bis 12,
**dadurch gekennzeichnet, dass** die Betätigungsmittel, mit denen jeweils jeder Scheinwerfer (2, 2', 3, 3') ausgerüstet ist, aufweisen:
*) das Gehäuse (45), das mit Mitteln (47) zum Drehantrieb um sich selbst um eine Rotationsachse (AR), die einer ersten Mobilitätsrichtung des Scheinwerfers (2, 2', 3, 3') entspricht, ausgerüstet ist, und
*) einen Träger (46) des Scheinwerfers (2, 2', 3, 3'), der mit Schwenkantriebsmitteln (48) auf dem Gehäuse (45) um eine Schwenkachse (AP) herum, die sich mit der Drehachse (AR) schneidet und einer zweiten Beweglichkeitsrichtung des Scheinwerfers (2, 2', 3, 3') entspricht, ausgerüstet ist.

14. Drehflügelflugzeug nach Anspruch 13,
**dadurch gekennzeichnet, dass** die Mittel (47) für einen Schwenkantrieb des Trägers (46) Mittel zum Versenken des Scheinwerfers (2, 2', 3, 3') in das Innere des Rahmens (45) darstellen, der als Aufnahme des Trägers (46) ausgebildet ist.

15. Verfahren zum Einsatz einer Beleuchtungseinrichtung, mit der ein Drehflügelflugzeug ausgerüstet ist,
**dadurch gekennzeichnet, dass** die Beleuchtungseinrichtung eine Beleuchtungseinrichtung gemäß einem der Ansprüche 9 bis 14 ist, und das Verfahren folgende Schritte aufweist:
*) einen ersten Schritt des Aussendens eines Befehls einer funktionellen Beleuchtung (44) an die Steuermittel (18) ausgehend von der Betätigung des Organs (43) zur Steuerung der funktionellen Beleuchtung durch eine Bedienungsperson,
*) einen Schritt der selektiven Aktivierung der Lichtquelle (20) mindestens eines der Scheinwerfer (2, 2', 3, 3') durch die Steuermittel (18), die für die ausgewählte Funktionalität genutzt werden ausgehend von dem funktionalen Beleuchtungsbefehl (44), und
*) gegebenenfalls, wenn die ausgewählte Beleuchtungsfunktionalität eine Suchbeleuchtungsfunktionalität ist, einen Schritt der Identifizierung eines Suchbereichs (4, 4', 7) durch die Identifizierungsmittel (22) ausgehend von einer Betätigung des Hauptsteuerorgans (24) durch die Bedienungsperson, das einen Beleuchtungsbefehl (23) sendet, und einen Schritt der einzelnen Betätigung von Scheinwerfern (2, 2', 3, 3'), deren Lichtquelle (20) aktiviert ist, was zu einem Konvergieren der Lichtstrahlen (5, 5', 6, 6'), die sie jeweils zu dem zuvor identifizierten Suchbereich (4, 4', 7) aussenden, führt.

16. Verfahren nach Anspruch 15,
**dadurch gekennzeichnet, dass** es mindestens einen Steuerungsschritt aufweist, hervorgerufen durch die Betätigung eines entsprechenden Steuerorgans durch die Betätigungsperson, aus den Steuerungsschritten, die Steuerbefehle erzeugen, die die Fokussierungsbefehle (28), die Befehle (33) zur dynamischen Beleuchtung, die Konvergenzbefehle (36) und die Bereichsbefehle (39) enthalten.

17. Verfahren nach Anspruch 16,
**dadurch gekennzeichnet, dass** bei dem Steuerschritt, der eine Erzeugung von Konvergenzbefehlen (36) enthält, die einzelnen Betätigungen der Scheinwerfer (2, 2', 3, 3'), bewirkt durch die Koordinationsmittel (25), in mindestens einem Suchbereich (7) zu einem Konvergieren der Projektionen (8, 9, 12, 13) der Lichtstrahlen (5, 5', 6, 6'), die jeweils von einer Gruppe von Scheinwerfern (2, 2', 3, 3') ausgesendet werden, führen, deren Lichtquelle (20) von den Koordinierungsmittel (25) aktiviert ist gemäß einer der folgenden Geometrien der Überlappung dieser Projektionen (8, 9, 12, 13):
*) einer totalen Überlappung der Gesamtheit der Projektionen (8, 9, 12, 13),
*) einer teilweisen Überlappung (10, 15, 16, 17) zwischen mindestens zwei Projektionen (8, 9, 12, 13),
*) einer Mehrzahl teilweiser Überlappungen (14, 16, 17) zwischen mindestens drei Projektionen (8, 9, 12, 13).

## Claims

1. Rotorcraft (1) provided with on-board lighting equipment for lighting its external environment, the lighting equipment comprising a plurality of lighting devices for lighting specific zones to be illuminated which are remote from the rotorcraft (1), including at least a landing lighting device, a searching lighting device and a winching lighting device, each of the lighting devices comprising at least one projector (2, 2', 3, 3') comprising a housing (19) which houses a lighting module comprising an optical system (21) and a light source (20), and control means (18) for controlling the emission of a light beam (5, 5', 6, 6') by the projector (2, 2', 3, 3'), the searching lighting device comprising at least one search projector which is mounted to move on the rotorcraft (1) and which is fitted with manoeuvring means (48, 47) for manoeuvring in azimuth and in elevation relative to the rotorcraft (1), the manoeuvring means (48, 47) being implemented by search control means (18) from a search lighting control (23) for lighting a search zone (4, 4', 7) to be illuminated, which is generated by at least one search control member driven by a human,
**characterised in that** the search projectors (2, 2', 3, 3') of the searching lighting device are composed of at least two projectors comprised by the other lighting devices comprised by the lighting equipment, the projectors (2, 2', 3, 3') of the lighting equipment being distributed on the rotorcraft (1) according to at least two lighting functions specific to said other lighting devices, the searching lighting function being obtained from a search lighting control (23) common to all of the search projectors, and from a selective implementation by the control means (18) of the projectors (2, 2', 3, 3') comprised by the lighting equipment.

2. Rotorcraft according to claim 1,
**characterised in that** the search control means (18) comprise:
*) identification means (22), from a search lighting control (23) common to all of the search projectors (2, 2', 3, 3'), for identifying a search zone (4, 4', 7) to be illuminated relative to a frame of reference (R) determined in relation to a point of origin (O) located on the rotorcraft (1) and relative to the respective positions on the rotorcraft (1) of the search projectors (2, 2', 3, 3') in relation to the frame of reference (R), and
*) coordination means (25) for coordinating the individual implementation of the search projectors (2, 2', 3, 3'), which cause a bringing into convergence towards the search zone (4, 4',7) of the light beams (5, 5', 6, 6') respectively emitted by the search projectors (2, 2', 3, 3') whose light source (20) is selectively activated.

3. Rotorcraft according to claim 2,
**characterised in that** the coordination means (25) generate selective activation orders (26) for selectively activating the light sources (20) of the search projectors (2, 2', 3, 3'), and individual drive orders (27) for driving the search projectors (2, 2', 3, 3') towards the search zone (4, 4', 7) which cause the individual activation of the manoeuvring means (47, 48) fitted respectively to the search projectors (2, 2', 3, 3') by inducing the convergence towards the search zone (4, 4', 7) of the light beams (5, 5', 6, 6') respectively emitted by the search projectors (2, 2', 3, 3') whose light source (20) is selectively activated.

4. Rotorcraft according to any one of claims 2 and 3,
**characterised in that** the coordination means (25) generate individual focusing orders (28) for the search projectors (2, 2', 3, 3'), which are derived from a focusing lighting control (29, 32) generated equally well by a focusing control member (30) driven by a human or by measurement means (31) for measuring the distance of separation between the rotorcraft (1) and the search zone (4, 4', 7), the focusing orders (28) relating to an individual distance of separation between the search projectors (2, 2', 3, 3") and the search zone (4, 4', 7) and causing the activation of an actuator of the optical system (21) of the search projectors (2, 2', 3, 3') modifying their focal distance.

5. Rotorcraft according to any one of claims 2 to 4,
**characterised in that** the coordination means (25) generate lighting dynamic orders (33) which relate to an individual driving of the search projectors (2, 2', 3, 3') in convergence towards the search zone (4, 4', 7), selectively either at a fixed position or according to a continuous driving of lighting of a moving search zone (4, 4', 7) defined relative to the frame of reference (R), the lighting dynamic orders (33) being derived from a dynamic lighting control (34) generated by a lighting dynamic control member (35) driven by a human.

6. Rotorcraft according to claim 5,
**characterised in that** the lighting dynamic orders (33) incorporate sweep speed orders of the moving search zone, which are generated by the coordination means (25), being derived from a sweep speed lighting control generated by a sweep speed control member which is driven by a human and which is fitted to the lighting dynamic control member (35).

7. Rotorcraft according to any one of claims 2 to 6,
**characterised in that** the coordination means (25) generate convergence orders (36) which relate to a driving of the projectors (2, 2', 3, 3') selectively either in total overlap or in partial overlap of the projections (8, 9, 12, 13) on the search zone (7) of the light beams (5, 5', 6, 6') respectively emitted by the projectors (2, 2', 3, 3'), the convergence orders (36) being derived from a convergence lighting control (37) generated by a convergence control member (38) driven by a human.

8. Rotorcraft according to any one of claims 2 to 7,
**characterised in that** the coordination means (25) generate zone orders (39) which relate to a driving of the projectors (2, 2', 3, 3') selectively towards a plurality of search zones (4,4') which are respectively allocated thereto, the zone orders (39) being derived from a zone lighting control (40) generated by a zone control member (41) driven by a human.

9. Rotorcraft according to any one of claims 1 to 8,
**characterised in that** the on-board lighting equipment of the rotorcraft (1) comprises the housing (19) which is fitted with mounting means movable on a frame (45) and said manoeuvring means (47, 48) are implemented to manoeuvre the projectors (2, 2', 3, 3') about at least two concurrent movement axes (AP, AR), the control means (18) incorporating identification means (22) from the lighting control (23) of a zone to be illuminated, the zone to be illuminated corresponding to a search zone (4, 4', 7) remote from the equipment relative to a frame of reference (R) previously established in relation to a considered point of origin (O), the lighting equipment comprising coordination means (25) for individual implementation of the search projectors (2, 2', 3, 3') which cause a bringing into convergence towards the search zone (4, 4', 7) of the light beams (5, 5', 6, 6') respectively emitted by the search projectors (2, 2', 3, 3') whose light source (20) is selectively activated, the lighting equipment control member being included in a control apparatus and comprises a multiple-choice control member (43) for functional lighting, the multiple-choice control member (43) generating a functional lighting control (44) relating to the selective implementation of a functionality of the lighting equipment from among a plurality of predefined lighting functionalities.

10. Rotorcraft according to claim 9,
**characterised in that** the functional lighting control member generates a functional lighting control (44) relating to the selective implementation of a functionality of the equipment from among at least a landing lighting functionality, a searching lighting functionality and a winching lighting functionality.

11. Rotorcraft according to claim 10,
**characterised in that** the control apparatus comprises a main control member (24) generating a lighting control (23) which is common to all of the projectors (2, 2', 3, 3') and which relates to a location of a search zone (4, 4', 7) relative to the point of origin (O) of the frame of reference (R), the main control member (24) being in communication with said identification means (22) to which said main control member (24) transmits the lighting control (23).

12. Rotorcraft according to claim 11,
**characterised in that** the main control member (24) is arranged as an articulated stick movable in multiple directions, which is accessorily fitted with at least one of a said focusing control member (30), a said lighting dynamic control member (35), a said convergence control member (38), a said zone control member (41) and the multiple-choice control member (43).

13. Rotorcraft according to any one of claims 9 to 12,
**characterised in that** the manoeuvring means individually fitted to each of the projectors (2, 2', 3, 3') comprise:
*) the frame (45) which is fitted with means for driving (47) in rotation on itself about an axis of rotation (AR) corresponding to a first direction of movement of the projector (2, 2', 3, 3'), and
*) a support (46) of the projector (2, 2', 3, 3') which is fitted with means for driving (48) in tilting on the frame (45) about a pivot axis (AP) concurrent with the axis of rotation (AR) and corresponding to a second direction of movement of the projector (2, 2', 3, 3').

14. Rotorcraft according to claim 13,
**characterised in that** the means for driving (47) in tilting of the support (46) constitute means for retracting the projector (2, 2', 3, 3') inside the frame (45), which is arranged as a receptacle for housing the support (46).

15. Method of implementing lighting equipment fitted to a rotorcraft,
**characterised in that** the lighting equipment is in accordance with any one of claims 9 to 14 and the method comprises:
*) an initial operation of transmitting to the control means (18) a said functional lighting control (44) on the basis of the driving by an operator of said functional lighting control member (43),
*) an operation of selective activation by the control means (18) of the light source (20) of at least one of the projectors (2, 2', 3, 3') utilised for the lighting functionality selected on the basis of the functional lighting control (44), and
*) where appropriate, if the selected lighting functionality is a searching lighting functionality, an operation of identification of a said search zone (4, 4', 7) by the identification means (22), on the basis of a driving by the operator of the main control member (24) transmitting a lighting control (23), and an operation of individual driving of the projectors (2, 2', 3, 3') whose light source (20) is activated, inducing a bringing into convergence of the light beams (5, 5', 6, 6') which they emit respectively towards the previously-identified search zone (4, 4', 7).

16. Method according to claim 15,
**characterised in that** it comprises at least one control operation derived from the driving by the operator of a corresponding control member, from among the control operations generating control orders comprising said focusing orders (28), said lighting dynamic orders (33), said convergence orders (36) and said zone orders (39).

17. Method according to claim 16,
**characterised in that** the control operation comprising a generation of convergence orders (36), the individual drivings of the projectors (2, 2', 3, 3') caused by the coordination means (25) induce on at least one search zone (7) a bringing into convergence of the projections (8, 9, 12, 13) of the light beams (5, 5', 6, 6') respectively emitted by a group of projectors (2, 2', 3, 3') whose light source (20) is activated by the coordination means (25), according to any one of the following overlap geometries of these projections (8, 9, 12, 13) :
*) a total overlap of all the projections (8, 9, 12, 13),
*) a partial overlap (10, 15, 16, 17) between at least two projections (8, 9, 12, 13),
*) a plurality of partial overlaps (14, 16, 17) between at least three projections (8, 9, 12, 13).
